# EUROPÄISCHE PATENTSCHRIFT

(11) **EP 1 736 343 B1**
(45) Veröffentlichungstag und Bekanntmachung des Hinweises auf die Patenterteilung: **22.05.2013**
(21) Anmeldenummer: 06012912.9
(22) Anmeldetag: 23.06.2006
(51) Int. Cl.: B60J 7/22

(54) **Windschott für ein Cabrioletfahrzeug**
Wind deflector for a convertible vehicle
Déflecteur de vent pour un cabriolet

(30) Priorität: 24.06.2005 DE 102005029692
(43) Veröffentlichungstag der Anmeldung: 27.12.2006
(73) Patentinhaber: Wilhelm Karmann GmbH, 49084 Osnabrück (DE)
(72) Erfinder: Liepe, Holger, 49205 Hasbergen (DE)
(74) Vertreter: Kronthaler, Schmidt & Coll.

(56) Entgegenhaltungen:
- EP-A- 0 718 135
- DE-A1- 19 508 989

## Beschreibung

Die Erfindung betrifft ein Windschott gemäß dem Oberbegriff des Anspruchs 1.

Windschotts sind allgemein, z.B. aus der DE 101 62 758, bekannt. Weitere Ausführungsformen von Windschotts sind in DE 40 18 862, DE 197 05 271 und DE 198 41 788 erläutert.

Die Erfindung geht aus von einem Windschott wie es z.B. in der DE 195 08 989 gezeigt ist. Ein solches Windschott umfasst einen horizontal und einen vertikal wirksamen Abschnitt, wobei der horizontal wirksame Abschnitt den Bereich einer Hintersitzanlage nach oben gegen verwirbelte Luftströmung und der vertikale Abschnitt die Rückseiten der Frontsitze speziell gegen in Fahrtrichtung verwirbelte Luftströmung abdeckt. Bei der aus der DE 195 08 989 bekanten Lösung wird der horizontal wirksame Abschnitt des Windschotts aus einem im Bereich der Hintersitzanlage angeordneten Rollokasten herausgezogen, indem eine Klappe, an der das Windschott angebracht ist, manuell aus einer Ablageposition hinter der Hintersitzanlage aufgenommen, um 180° gedreht und dann an einer Arbeitsposition hinter den Frontsitzen abgelegt wird. Als vertikal wirksamer Abschnitt ist an der Klappe ein auf einen unklappbaren, ansonsten aber starren Rahmen gespanntes Gewebe vorgesehen.

Nachteilig bei diesem bekannten Windschott ist die vergleichsweise umständliche Handhabungsweise.

Der Erfindung liegt daher die Aufgabe zugrunde, ein Windschott anzugeben, bei dem die Handhabung erleichtert ist.

Diese Aufgabe wird erfindungsgemäß mit den Merkmalen des Anspruchs 1 gelöst. Dazu ist bei einem Windschott mit einem horizontal und einem vertikal wirksamen Abschnitt, wobei der horizontal wirksame Abschnitt mittels eines Rahmenbasisteils aus einem im Bereich einer Hintersitzanlage eines Cabriolet-Fahrzeugs angeordneten ortsfesten Rollokasten herausziehbar ist, vorgesehen, dass das Rahmenbasisteil in seitlichen Führungsschienen horizontal verschieblich ist. Der horizontal wirksame Abschnitt des Windschotts kommt dabei in etwa in Höhe eines Brüstungsbereichs des Cabriolet-Fahrzeugs zu liegen. Der vertikal wirksame Abschnitt ist hinter den beiden vorderen Sitzen vorgesehen.

Der Vorteil der Erfindung besteht darin, dass durch die Führung des Rahmenbasisteils in den seitlichen Führungsschienen, also z.B. Führungsschienen, die in eine Seitenverkleidung der Hintersitzanlage integriert sind, eine definierte Bewegungsmöglichkeit des Rahmenbasisteils geschaffen ist, so dass Fehlbedienungen und Fehljustierungen praktisch nicht vorkommen können. In einer besonders bevorzugten Ausführungsform erfolgt die Bewegung des Rahmenbasisteils in den Führungsschienen aufgrund eines steuerbaren Antriebs, so dass ein manueller Eingriff der jeweiligen Bedienperson auf die Betätigung eines Aktivierungsmittels zum automatischen Aufstellen des Windschotts, z.B. eines diesbezüglichen Schalters am Armaturenbrett, beschränkt bleibt.

Vorteilhafte Ausgestaltungen der Erfindung sind Gegenstand der Unteransprüche.

Bevorzugt ist dabei der vertikal wirksame Abschnitt aus einem am Rahmenbasisteil vorgesehenen weiteren Rollokasten herdes ausziebar. Es ergeben sich damit zwei unabhängige Abschnitte des Windschotts, die ggf. auch aus unterschiedlichen Materialien herstellbar sind.

Zum Aufspannen des vertikal wirksamen Abschnitts des Windschotts sind bevorzugt an dem Rahmenbasisteil angelenkte, entlang einer vertikalen Ebene quer zur Fahrzeuglängsrichtung verschwenkbare Rahmenseitenteile vorgesehen, wobei die Rahmenseitenteile, das Rahmenbasisteil und der vertikal wirksame Abschnitt derart miteinander in Wirkverbindung stehen, dass bei Verschieben des Rahmenbasisteils in Richtung auf die Frontsitze ein Aufspannen des horizontal wirksamen Abschnitts sowie ein Aufrichten der Rahmenseitenteile erfolgt. Es erfolgt mithin ein gleichzeitiges Aufstellen des Windschotts im horizontal und im vertikal wirksamen Bereich.

Vorteilhaft ist dabei als Wirkverbindung zum Aufspannen des vertikalen Abschnitts mit der (während der/synchron zur) horizontalen Bewegung des Rahmenbasisteils ein Umlenkgetriebe vorgesehen. Ein solches Umlenkgetriebe kann durch eine Zahnstange in einer der Führungsschienen oder je eine Zahnstange in jeder Führungsschiene gebildet sein, die beim Bewegen des Rahmenbasisteils eine von diesem mitgeführte Welle (oder zwei Wellenabschnitte) aufgrund eines an einem oder.jedem Ende der Welle (des Wellenabschnitts) befindlichen und im Eingriff mit der oder jeder Zahnstange befindlichen Zahnrades in Umdrehung versetzt wird, wobei die Umdrehung der Welle (des Wellenabschnitts) durch einen auf dem Gewinde der Welle geführten Kulissenstein, einen daran und an dem jeweiligen Rahmenseitenteil angelenkten Hebel in eine Schwenkbewegung der Rahmenseitenteile umgesetzt wird. Hinsichtlich weiterer Details wird auf die Anmeldung der Wilhelm Karmann GmbH mit gleichem Anmeldetag und mit dem gleichen Titel "Windschott für ein Cagbrioletfahrzeug" verwiesen, deren vollstängiger Offenbarungsgehalt hiermit in die vorliegende Anmeldung einbezogen wird.

Bevorzugt ist im Bereich des vertikalen Abschnitts eine Rahmenstange vorgesehen, die mittels der seitlichen Rahmenteile bei deren Schwenkbewegung angehoben wird. Die Rahmenstange verleiht dem vertikalen Abschnitt des Windschotts eine höhere Steifigkeit. Wenn als flächiges Element zur Verhinderung von Windeintrag ein an sich bekanntes Rollo, also ein Durchbrechungen aufweisendes Gewebe, verwendet wird, ist ein solches Rollo vorteilhaft mit seiner Oberkante an der Rahmenstange, insbesondere über die gesamte Länge der Rahmenstange, angebracht. Dies vermeidet wirksam ansonsten auftretendes störendes Flattern des Rollos im Luftzug. Des Weiteren ergibt sich mit der Rahmenstange und den Rahmenseitenteilen eine im weitesten Sinne U-förmige Kontur, die sich in ihrer Höhe bis in den Bereich der Kopfstützen der Vordersitze erstreckt und in dieser Position bei entsprechender Steifigkeit, also im Wesentlichen bei Verwendung entsprechender Materialien und/oder geeigneter Profile, sowie bei Vorhandensein geeigneter Krafteinleitungspunkte am unteren Ende der Rahmenteile sogar noch als Insassenschutz wirksam sein kann.

Wenn das Rahmenbasisteil teleskopierbar ist, ist eine Bewegung des Rahmenbasisteils auch in einer sich in Fahrzeuglängsrichtung nach hinten verjüngenden Hintersitzanlage möglich. Die Einsatzmöglichkeit der Erfindung ist mit einem teleskopierbaren Rahmenbasisteil also nicht auf bestimmte Geometrien des betroffenen Abschnitts des Cabriolet-Fahrzeugs beschränkt.

Bevorzugt sind die seitlichen Führungsschienen durch klappbare Zierleisten (Seitenverkleidungsabdeckung) abdeckbar, wobei die jeweiligen Abdeckungen beim Aufstellen des Windschotts aus der jeweiligen Fahrzeuginnenverkleidung entweder noch oben oder nach unten hexausklappen. Das Ausklappen der Abdekkungen erfolgt in Abhängigkeit von der Bewegung des Rahmenbasisteils, z.B. indem das Rahmenbasisteil zu Beginn seiner Bewegung Arretierungen der vorgenannten Abdeckungen löst, die daraufhin aufgrund z.B. einer Federvorspannung die Führungsschienen freigeben.

Besonders bevorzugt ist vorgesehen, dass das Rahmenbasisteil, insbesondere an seiner Vorderseite, Gurtführungen aufweist, mittels derer die Sicherheitsgurte der Rücksitzanlage geeignet geführt werden, so dass eine Beeinträchtigung des Aufstellens des Windschotts durch die rückwärtigen Sicherheitsgurte vermieden wird.

Gemäß einer bevorzugten Ausführungsform der Erfindung ist vorgesehen, dass der horizontal wirksame Abschnitt des Windschotts durch eine Lamellenlage gebildet wird, deren einzelne Lamellen um eine Drehachse quer zur Fahrzeuglängsrichtung verschwenkbar sind. Zusätzlich kann auch vorgesehen sein, dass sich der vertikal wirksame Abschnitt auch unterhalb des Brüstungsbereichs, also unterhalb des Rahmenbasisteils, bis in den rückwärtigen Fußraum fortsetzt. Auf diese Weise entsteht im Bereich der Hintersitzanlage ein geschlossener Abschnitt, der als "zusätzlicher Kofferraum" nutzbar ist.

Gemäß einer vorteilhaften Ausführungsform ist der horizontal und vertikal wirksame Abschnitt des Windschotts Teil eines einstückig aus dem im Bereich der Hintersitzanlage angeordneten Rollokasten herausziehbaren Rollos. Es ergibt sich dann gemäß einem eigenständigen Aspekt der Erfindung ein Windschott mit einem horizontal und einem vertikal wirksamen Ab-Hintersitzanlage in Form eines einstückig aus einem im Bereich einer Hintersitzanlage eines Cabriolet-Fahrzeugs angeordneten Rollokasten herausziehbaren Rollos, wobei der besondere Vorteil in der Einstückigkeit des Rollos und der Notwendigkeit nur eines Rollokastens besteht. Bei einem solchen Windschott fungiert das Rahmenbasisteil in Bezug auf das einstückige Rollo als Umlenkung, so dass sich bis zu dieser Umlenkung der horizontal wirksame Abschnitt und im Anschluss an die Umlenkung der vertikal wirksame Abschnitt des Windschotts ergibt.

Auch wenn die vorliegende Erfindung vorangehend stets konkret in Bezug auf das erfindungsgemäße Windschott beschrieben wurde, erfasst die Erfindung selbstverständlich auch ein Cabriolet-Fahrzeug mit einem Windschott gemäß der Erfindung oder einer ihrer Ausführungsformen oder Ausgestaltungen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: eine Hintersitzanlage eines Cabriolet-Fahrzeugs,
- Fig. 2: die Hintersitzanlage mit freigegebenen Führungsschienen,
- Fig. 3: die Hintersitzanlage mit einem in den Führungsschienen laufenden, teilweise aufgestellten Windschott,
- Fig. 4: das Windschott in aufgestelltem Zustand,
- Fig. 5: eine alternative Ausführungsform eines horizontal wirksamen Abschnitts des Windschotts und
- Fig. 6: eine alternative Ausführungsform des Windschotts, das einen vollständigen Einschluss der Hintersitzanlage bewirkt.

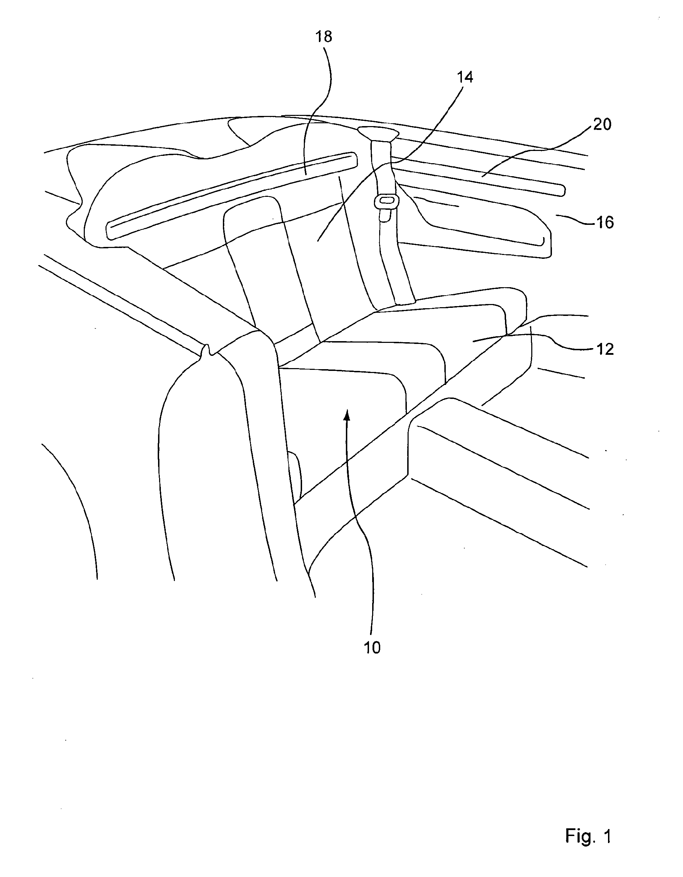

Fig. 1 zeigt eine Hintersitzanlage 10 eines Cabriolet-Fahrzeugs. Die Hintersitzanlage 10 umfasst in an sich bekannter Weise rückwärtige Sitzpolster 12 sowie eine Rückenlehne 14. Seitlich wird die Hintersitzanlage 10 durch eine jeweils angrenzende Seitenverkleidung 16 als Fahrzeuginnenverkleidung begrenzt. Das erfindungsgemäße Windschott ist im Bereich der Hintersitzanlage 10, in der dargestellten Ausführungsform in der Rückenlehne 14 angeordnet, wobei in der Darstellung in Fig. 1 von dem beweglichen Windschott nur eine Sitzanlagenabdeckung 18 erkennbar ist. Eine weitere Abdeckung ist in der Seitenverkleidung 16 als Seitenverkleidungsabdeckung 20 erkennbar.

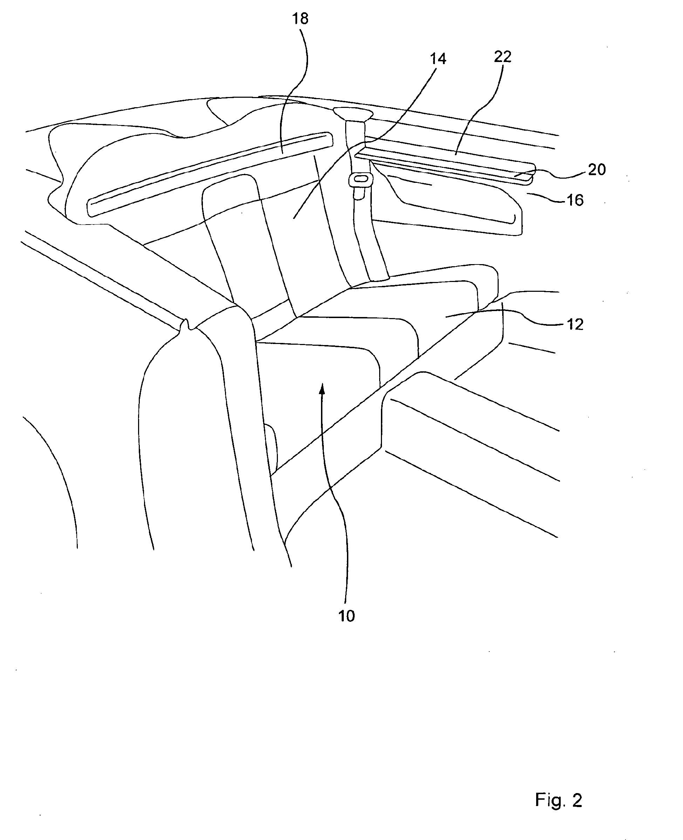

Fig. 2 zeigt in gleicher Perspektive wie die Darstellung in Fig. 1 die Hintersitzanlage 10, wobei die Seitenverkleidungsabdeckung 20 geöffnet (herunter geklappt) ist und eine darunter liegende Führungsschiene 22 erkennbar wird.

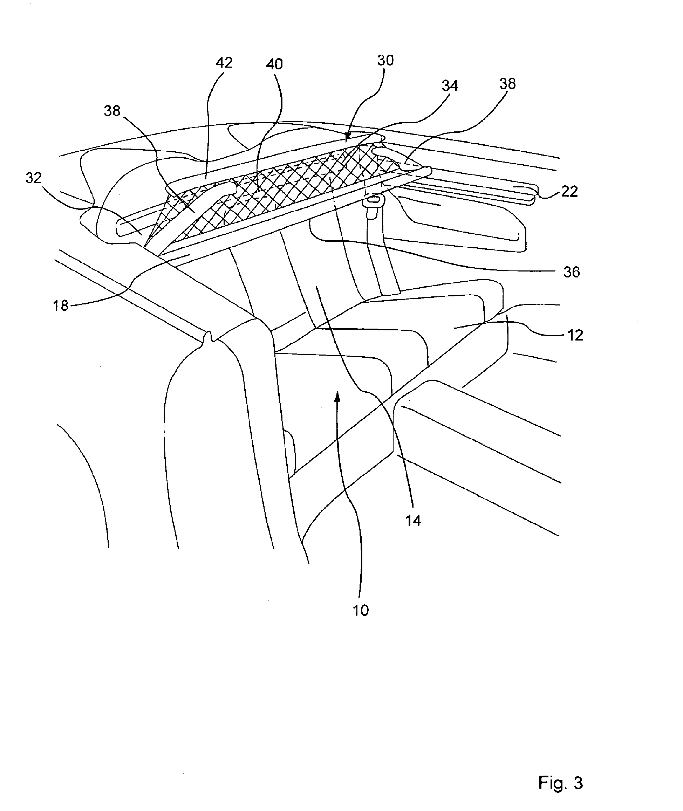

Fig. 3 zeigt ein teilweise aufgestelltes Windschott 30 mit einem horizontalen (horizontal wirksamen) Abschnitt 32 und einem vertikalen (vertikal wirksamen) Abschnitt 34. Der horizontale Abschnitt 32 erstreckt sich bei vollständig aufgestelltem Windschott 30 im Bereich und entlang einer Brüstungslinie des Cabriolet-Fahrzeugs. Eine Vorderkante des horizontalen Bereichs 32 wird durch ein Rahmenbasisteil 36 gebildet, das an seiner Vorderkante die Sitzanlagenabdeckung 18 trägt. An das Rahmenbasisteil 36 angelenkt sind zwei Rahmenseitenteile 38, die entlang einer vertikalen Ebene quer zur Fahrzeuglängsrichtung verschwenkbar sind. In der in Fig. 3 dargestellten Momentaufnahme beim Aufstellen des Windschotts 30 sind die Rahmenseitenteile 38 teilweise verschwenkt. Die Schwenkposition der Rahmenseitenteile 38 korrespondiert mit dem Weg, den das Rahmenbasisteil 36 entlang der Führungsschienen 22 bereits in horizontaler Richtung zurückgelegt hat. Diese Verknüpfung beim Aufspannen des horizontalen Abschnitts 32 und des vertikalen Abschnitts 34 des Windschotts 30 ergibt sich aufgrund einer Wirkverbindung zum Aufspannen des vertikalen Abschnitts 34 mit der horizontalen Bewegung des Rahmenbasisteils 36 aufgrund eines nicht dargestellen Umlenkgetriebes.

In der in den Fig. 1 bis Fig. 4 dargestellten Ausführungsform ist als wirksame Fläche des Windschotts 30 zur Vermeidung unerwünschter Luftströmungen ein mit Durchbrechungen versehenes Gewebe 40 gezeigt. Das Gewebe 40 wird für den horizontal wirksamen Abschnitt 32 mittels des Rahmenbasisteils 36 aus einem nicht dargestellten, im Bereich der Hintersitzanlage 10, insbesondere in oder hinter den Rückenlehnen 14, angeordneten ortsfesten Rollokasten herausgezogen. Das Gewebe 40 im vertikalen Abschnitt 34 wird entweder aus dem gleichen Rollokasten oder einem weiteren, dem Rahmenbasisteil 36 räumlich zugeordneten und damit genau wie das Rahmenbasisteil 36 translatorische verschieblichen weiteren Rollokasten herausgezogen. Im letzteren Fall ergeben sich zwei von einander unabhängige Rollos. Im ersteren Fall ergibt sich ein einstückiges Rollo, das insgesamt aus dem einen ortsfesten Rollokasten herausgezogen wird.

Im Bereich des vertikalen Abschnitts 34 ist eine Vorderkante des Gewebes 40, also entweder des einstückigen Rollos oder des Rollos, das aus dem dem Rahmenbasisteil 36 zugeordneten weiteren Rollokasten abgezogen wird, mit einer Rahmenstange 42 verbunden. Diese Rahmenstange 42 wird beim Verschwenken der Rahmenseitenteile 38 von diesen angehoben, so dass das Verschwenken der Rahmenseitenteile 38 auch das Aufspannen des Windschotts im vertikalen Bereich 34 bewirkt.

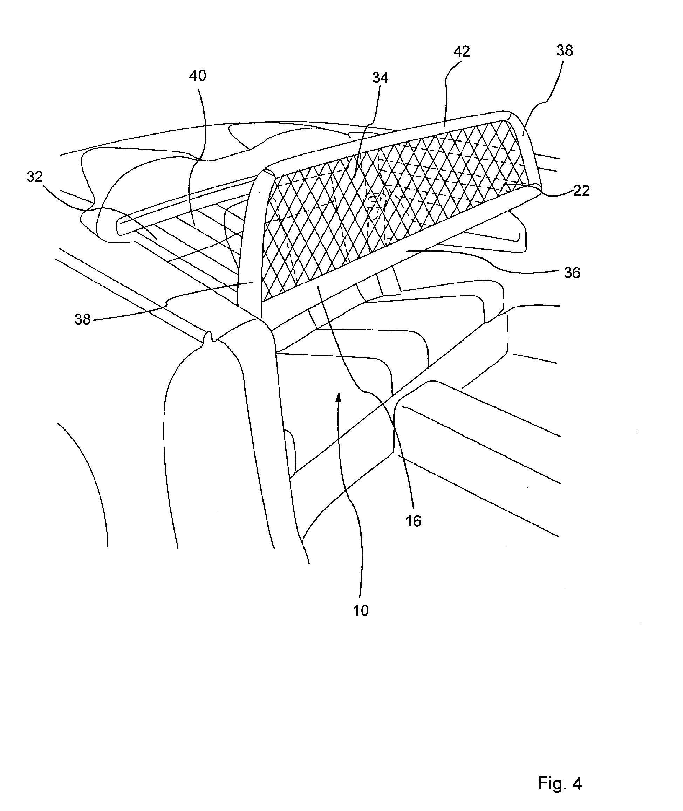

Fig. 4 zeigt das vollständig aufgespannte Windschott 30. Das Rahmenbasisteil 36 ist bis zum vorderen Ende der Führungsschienen 22 verschoben und ist dort in nicht näher dargestellter Weise fixiert. - Soweit die translatorische Bewegung des Rahmenbasisteils 36 z.B. mitteils einer in der Führungsschiene 22 vorgesehenen Spindel (nicht dargestellt) erfolgt, ist diese Positionsfixierung einfach durch Anhalten der Spindel gegeben. - Die Rahmenseitenteile 38 sind in ihre Endposition verschwenkt und die Rahmenstange 42 ist an den freien Enden der Rahmenseitenteile 38 eingerastet oder in sonst geeigneter Weise mit den Rahmenseitenteilen 38 verbunden.

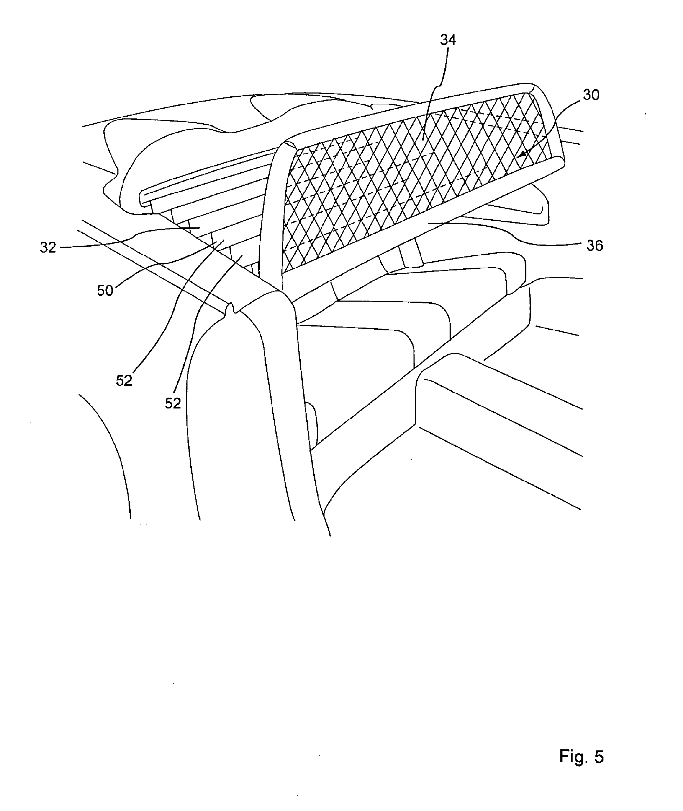

Fig. 5 zeigt eine besondere Ausführungsform des erfindungsgemäßen Windschotts 30 wobei der horizontal wirksame Abschnitt 32 durch eine Lamellenlage 50 gebildet wird, deren einzelne Lamellen 52 um eine Drehachse quer zur Fahrzeuglängsrichtung verschwenkbar sind.

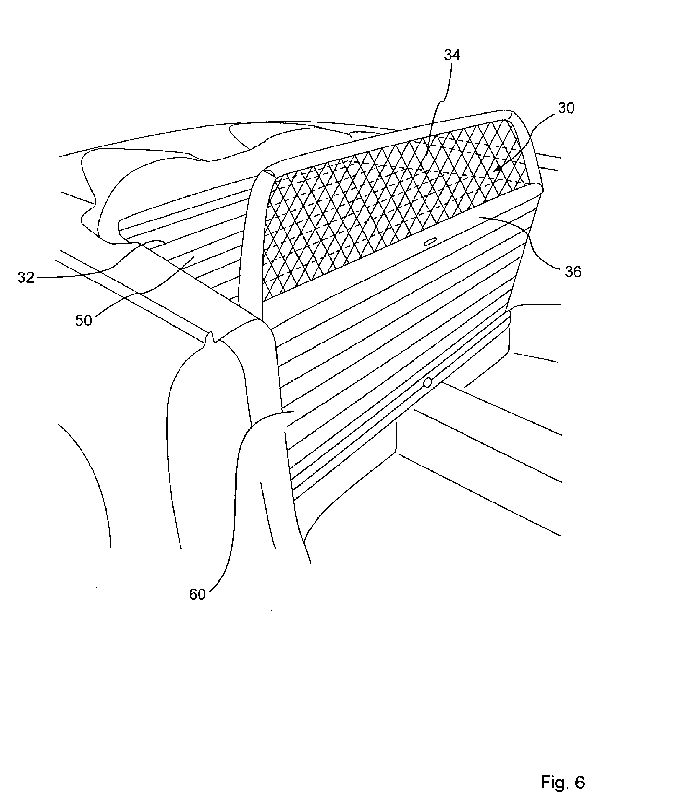

Fig. 6 zeigt eine weitere Ausführungsform des erfindungsgemäßen Windschotts 30 wobei unterhalb des vertikalen Abschnitts 34, also zwischen Rahmenbasisteil 36 und Fußbereich der Hintersitzanlage 10 eine vertikale Lamellenlage 60 vorgesehen ist, wobei zusammen mit der Lamellenlage 50 im horizontalen Abschnitt 32 ein geschlossener Abschnitt im Bereich der Hintersitzanlage 10 entsteht, der als "zusätzliche Kofferraum" verwendbar ist.

Zusammenfassend lässt sich die vorliegende Erfindung damit kurz wie folgt beschreiben: Es wird ein Windschott 30 mit einem horizontal und einem vertikal wirksamer Abschnitt 32, 34 angegeben, wobei der horizontal wirksame Abschnitt 32 mittels eines Rahmenbasisteils 36 aus einem im Bereich einer Hintersitzanlage 10 eines Cabriolet-Fahrzeugs angeordneten ortsfesten Rollokasten herauziehbar, das sich dadurch auszeichnet, dass das Rahmenbasisteil 36 i seitlichen Führungsschienen 22 horizontal verschieblich ist.

### BEZUGSZEICHENLISTE

- 10: Hintersitzanlage
- 12: Sitzpolster
- 14: Rückenlehne
- 16: Seitenverkleidung
- 18: Sitzanlagenabdeckung
- 20: Seitenverkleidungsabdeckung
- 22: Führungschiene
- 30: Windschott
- 32: horizontaler Abschnitt
- 34: vertikaler Abschnitt
- 36: Rahmenbasisteil
- 38: Rahmenseitenteil
- 40: Gewebe
- 42: Rahmenstange
- 50: Lamellenlage
- 52: Lamellen
- 60: vertikale Lamellenlage

## Patentansprüche

1. Windschott mit einem horizontal und einem vertikal wirksamen Abschnitt (32, 34), wobei der horizontal wirksame Abschnitt mittels eines Rahmenbasisteils (36) aus einem im Bereich einer Hintersitzanlage (10) eines Cabriolet-Fahrzeugs anzuordnenden ortsfesten Rollokasten herausziehbar ist,
**dadurch gekennzeichnet,**
**dass** das Rahmenbasisteil (36) in seitlichen Führungsschienen (22) horizontal verschieblich ist.

2. Windschott nach Anspruch 1,
wobei der vertikal wirksame Abschnitt (34) aus einem am Rahmenbasisteil (36) vorgesehenen weiteren Rollokasten herausziehbar ist.

3. Windschott nach Anspruch 2,
mit an dem Rahmenbasisteil (36) angelenkten, entlang einer vertikalen Ebene quer zur Fahrzeuglängsrichtung verschwenkbaren Rahmenseitenteilen (38),
wobei die Rahmenseitenteile (38), das Rahmenbasisteil (36) und der vertikal wirksame Abschnitt (34) derart miteinander in Wirkverbindung stehen, dass bei Verschieben des Rahmenbasisteils (36) in Richtung auf die Frontsitze ein Aufspannen des horizontal wirksamen Abschnitts (32) sowie ein Aufrichten der Rahmenseitenteile (38) und ein Aufspannen des vertikal wirksamen Abschnitts (34) erfolgt.

4. Windschott nach Anspruch 3,
wobei als Wirkverbindung zum Aufspannen des vertikalen Abschnitts (34) mit der horizontalen Bewegung des Rahmenbasisteils (36) ein Umlenkgetriebe vorgesehen ist.

5. Windschott nach Anspruch 3 oder 4,
wobei im Bereich des vertikalen Abschnitts (34) eine Rahmenstange (42) vorgesehen ist, die mittels der Rahmenseitenteile (38) bei deren Schwenkbewegung angehoben wird.

6. Windschott nach einem der vorangehenden Ansprüche, wobei das Rahmenbasisteil (38) teleskopierbar ist.

7. Windschott nach einem der vorangehenden Ansprüche, wobei die seitlichen Führungsschienen (22) durch klappbare Zierleisten abdeckbar sind.

8. Windschott nach einem der vorangehenden Ansprüche, wobei das Rahmenbasisteil (36) Gurtführungen aufweist.

9. Windschott nach einem der Ansprüche 1 bis 8,
wobei der horizontal wirksame Abschnitt (32) durch eine Lamellenlage (50) gebildet wird, deren einzelne Lamellen um eine Drehachse quer zur Fahrzeuglängsrichtung verschwenkbar sind.

10. Windschott nach einem der Ansprüche 1 oder 3 bis 7, wobei der horizontal und vertikal wirksame Abschnitt (32, 34) Teile eines einstückig aus dem im Bereich der Hintersitzanlage (10) angeordneten Rollokasten herausziehbaren Rollos sind.

11. Cabriolet-Fahrzeug mit einem Windschott nach einem oder mehreren der vorangehenden Ansprüche.

## Claims

1. A wind deflector comprising a horizontally and vertically acting portion (32, 34), wherein a frame base part (36) allows the horizontally acting portion to be pulled out of a stationary blind case, which is to be arranged in the region of a rear seat system (10) of a convertible vehicle, **characterised in that**
the frame base part (36) is horizontally displaceable in lateral guide rails (22).

2. The wind deflector according to claim 1, wherein the vertically acting portion (34) can be pulled out of another blind case provided on the frame base part (36).

3. The wind deflector according to claim 2, comprising lateral frame parts (38), which are articulated to the frame base part (36) and are pivotable along a vertical plane transversely to the longitudinal vehicle direction,
said lateral frame parts (38), said frame base part (36) and said vertically acting portion (34) being operatively connected with each other in such a manner that a displacement of the frame base part (36) towards the front seats causes the horizontally acting portion (32) to be extended, the lateral frame parts (38) to be straightened up and the vertically acting portion (34) to be extended.

4. The wind deflector according to claim 3, wherein a reversing gear is provided as the operative connection for extending the vertical portion (34) by the horizontal movement of the frame base part (36).

5. The wind deflector according to claim 3 or 4, wherein a frame bar (42) is provided in the region of the vertical portion (34), which frame bar (42) is lifted by means of the lateral frame parts (38) during their pivoting movement.

6. The wind deflector according to any one of the preceding claims, wherein the frame base part (38) can be telescoped.

7. The wind deflector according to any one of the preceding claims, wherein the lateral guide rails (22) can be covered by foldable mouldings.

8. The wind deflector according to any one of the preceding claims, wherein the frame base part (36) comprises belt guides.

9. The wind deflector according to any one of claims 1 to 8, wherein the horizontally acting portion (32) is formed by a layer of laminations (50) whose individual laminations can be pivoted around a rotational axis in a transverse direction with respect to the longitudinal vehicle direction.

10. The wind deflector according to any one of claims 1 or 3 to 7, wherein the horizontally acting and the vertically acting portions (32, 34) are parts of a blind which can be pulled out in one piece from the blind case arranged in the region of the rear seat system (10).

11. A convertible vehicle comprising a wind deflector according to one or more of the preceding claims.

## Revendications

1. Coupe-vent, comprenant une section active en horizontale et une section active en verticale (32, 34), ladite section active en horizontale pouvant être sortie d'un caisson de store stationnaire, disposé dans la région d'une installation de siège arrière (10) d'un véhicule cabriolet, au moyen d'une partie de base de cadre (36),
**caractérisé en ce que**
la partie de base de cadre (36) est horizontalement déplaçable dans des rails de guidage latéraux (22).

2. Coupe-vent selon la revendication 1, dans lequel on peut sortir la section active en verticale (34) d'un autre caisson de store disposé sur la partie de base de cadre (36).

3. Coupe-vent selon la revendication 2, comprenant des parties de cadre latérales (38) qui sont articulées à la partie de base de cadre (36) et que l'on peut faire pivoter selon un plan vertical en direction transversale par rapport à la direction longitudinale du véhicule,
lesdites parties de cadre latérales (38), ladite partie de base de cadre (36) et ladite section active en verticale (34) étant en liaison active mutuelle de sorte qu'un déplacement de la partie de base de cadre (36) vers les sièges avant ait pour résultat d'étendre la section active en horizontale (32), d'ériger les parties de cadre latérales (38) et d'étendre la section active en verticale (34).

4. Coupe-vent selon la revendication 3, dans lequel on prévoit une transmission de renvoi en tant que liaison active pour étendre la section verticale (34) par le déplacement horizontal de la partie de base de cadre (36).

5. Coupe-vent selon la revendication 3 ou 4, dans lequel on prévoit une barre de cadre (42) dans la région de la section verticale (34), ladite barre de cadre (42) étant levée au moyen des parties de cadre latérales (38) lors de leur pivotement.

6. Coupe-vent selon l'une quelconque des revendications précédentes, dans lequel la partie de base de cadre (38) est télescopable.

7. Coupe-vent selon l'une quelconque des revendications précédentes, dans lequel les rails de guidage latéraux (22) peuvent être couverts par des moulures pliables.

8. Coupe-vent selon l'une quelconque des revendications précédentes, dans lequel la partie de base de cadre (36) comprend des guides de courroie.

9. Coupe-vent selon l'une quelconque des revendications 1 à 8, dans lequel la section active en horizontale (32) est constituée par une couche de lamelles (50) dont on peut faire pivoter les lamelles individuelles autour d'un axe de rotation s'étendant en direction transversale par rapport à la direction longitudinale du véhicule.

10. Coupe-vent selon l'une quelconque des revendications 1 ou 3 à 7, dans lequel la section active en horizontale et la section active en verticale (32, 34) constituent des parties d'un store que l'on peut sortir intégralement du caisson de store disposé dans la région de l'installation de siège arrière (10).

11. Véhicule cabriolet, comprenant un coupe-vent selon une ou plusieurs des revendications précédentes.
